# EUROPEAN PATENT APPLICATION

(11) **EP 4 827 218 A1**
(43) Date of publication of application: **21.10.2026**
(21) Application number: 24904232.6
(22) Date of filing: 10.12.2024
(51) Int. Cl.: H04W 72/51, H04W 84/06, H04W 72/1263, H04W 24/08, H04B 17/318, H04W 72/23, H04W 72/1268, H04W 72/11

(54) **METHOD AND APPARATUS FOR REPORTING CHANNEL STATE INFORMATION FOR COMMUNICATION OF AIR MOBILITY**

(30) Priority: 15.12.2023 KR 20230183564; 23.01.2024 KR 20240010226
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Plasseraud IP
(86) International application number: PCT/KR2024/020148
(87) International publication number: WO 2025/127667

(57) **Abstract**

Proposed is a method for operation of a first device (100) in a wireless communication system. The method may comprise the steps of: receiving a plurality of first reference signals from a second base station (300) different from a first base station (200) serving the first device (100); and generating first channel state information, wherein the first channel state information is information regarding at least one channel state causing the lowest interference in communication between the first device (100) and the first base station (200), from among a plurality of first channel states related to the plurality of first reference signals.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method that may be performed by a first device may be proposed. For example, the method may comprise: receiving, from a second base station different from a first base station that serves the first device, a plurality of first reference signals; generating first channel state information based on the plurality of first reference signals, wherein the first channel state information may be information for at least one channel state that causes a lowest interference for communication between the first device and the first base station, among a plurality of first channel states related to the plurality of first reference signals; and transmitting, to the first base station, the first channel state information.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: receive, from a second base station different from a first base station that serves the first device, a plurality of first reference signals; generate first channel state information based on the plurality of first reference signals, wherein the first channel state information may be information for at least one channel state that causes a lowest interference for communication between the first device and the first base station, among a plurality of first channel states related to the plurality of first reference signals; and transmit, to the first base station, the first channel state information.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: receive, from a second base station different from a first base station that serves the first device, a plurality of first reference signals; generate first channel state information based on the plurality of first reference signals, wherein the first channel state information may be information for at least one channel state that causes a lowest interference for communication between the first device and the first base station, among a plurality of first channel states related to the plurality of first reference signals; and transmit, to the first base station, the first channel state information.

According to an embodiment of the present disclosure, a non-transitory computer-readable storage medium storing instructions may be proposed. For example, the instructions, when executed, may cause a first device to: receive, from a second base station different from a first base station that serves the first device, a plurality of first reference signals; generate first channel state information based on the plurality of first reference signals, wherein the first channel state information may be information for at least one channel state that causes a lowest interference for communication between the first device and the first base station, among a plurality of first channel states related to the plurality of first reference signals; and transmit, to the first base station, the first channel state information.

According to an embodiment of the present disclosure, a method that may be performed by a second device may be proposed. For example, the method may comprise: receiving, from a first device, first channel state information, wherein the first channel state information may be information for at least one channel state that causes a lowest interference for communication between the first device and the second device, among a plurality of first channel states related to a plurality of first reference signals, wherein the first channel state information may be generated based on the plurality of first reference signals, wherein the plurality of first reference signals may be transmitted by a third device to the first device, and wherein the first device may be served by the second device.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, first channel state information, wherein the first channel state information may be information for at least one channel state that causes a lowest interference for communication between the first device and the second device, among a plurality of first channel states related to a plurality of first reference signals, wherein the first channel state information may be generated based on the plurality of first reference signals, wherein the plurality of first reference signals may be transmitted by a third device to the first device, and wherein the first device may be served by the second device.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a transmission spatial filter and a reception spatial filter, according to one embodiment of the present disclosure.
FIG. 10 shows a method for determining whether a reception spatial filter covers a transmission spatial filter, according to one embodiment of the present disclosure.
FIG. 11 shows a type of a cell serving a device, which is changed according to an altitude of the device, according to an embodiment of the present disclosure.
FIG. 12 shows a procedure in which a device generates and reports channel state information (e.g., CSI) based on a plurality of reference signals, according to an embodiment of the present disclosure.
FIG. 13 shows a procedure of operations that may be performed by a first device, according to an embodiment of the present disclosure.
FIG. 14 shows a procedure of operations that may be performed by a second device, according to an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (e.g., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

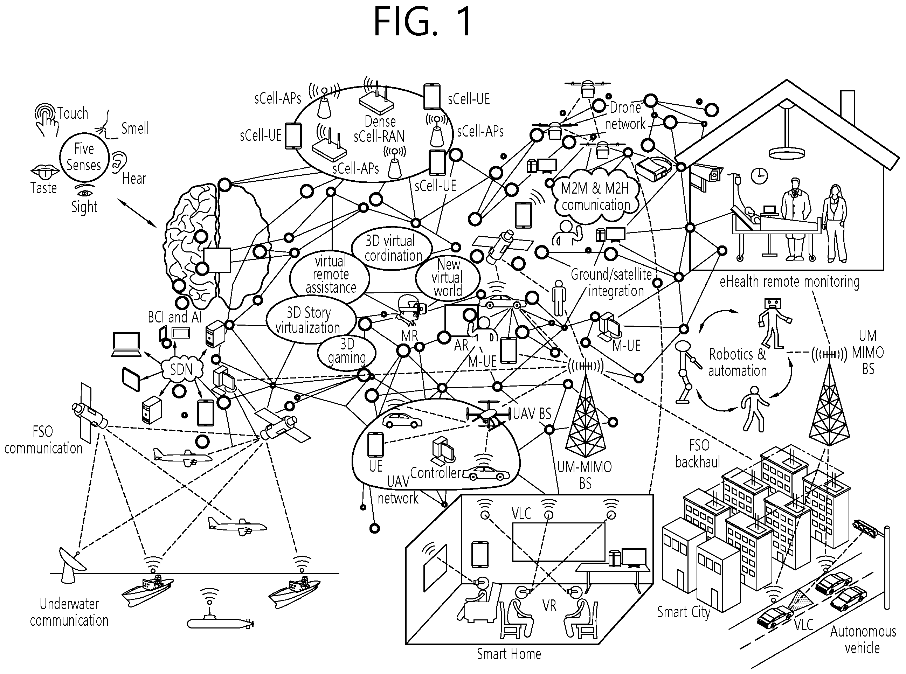

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

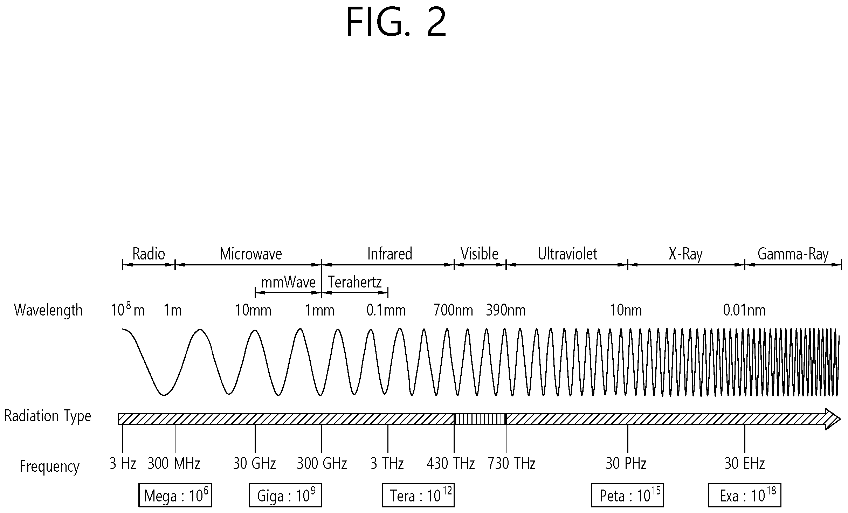

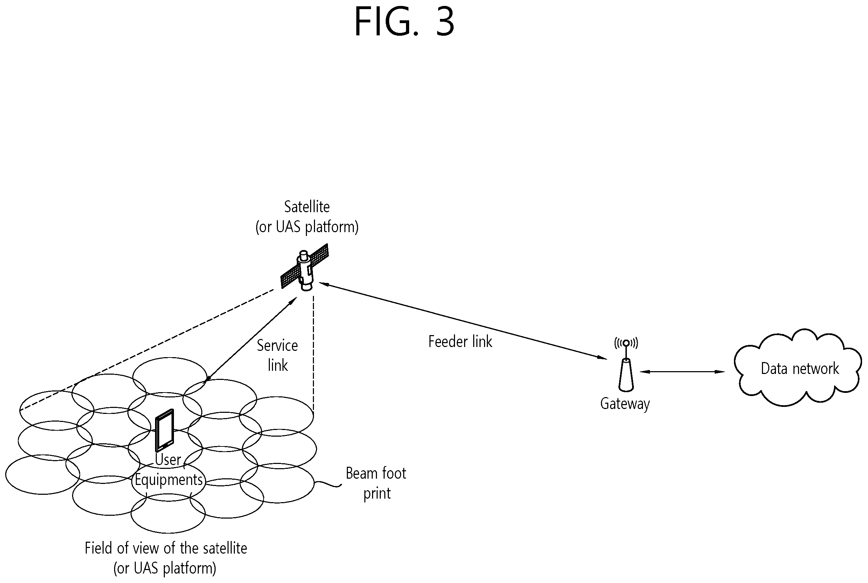

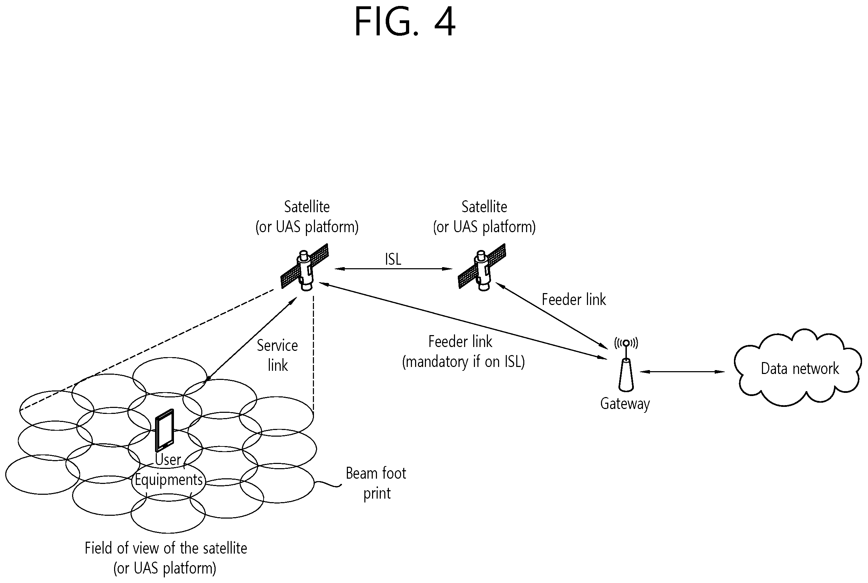

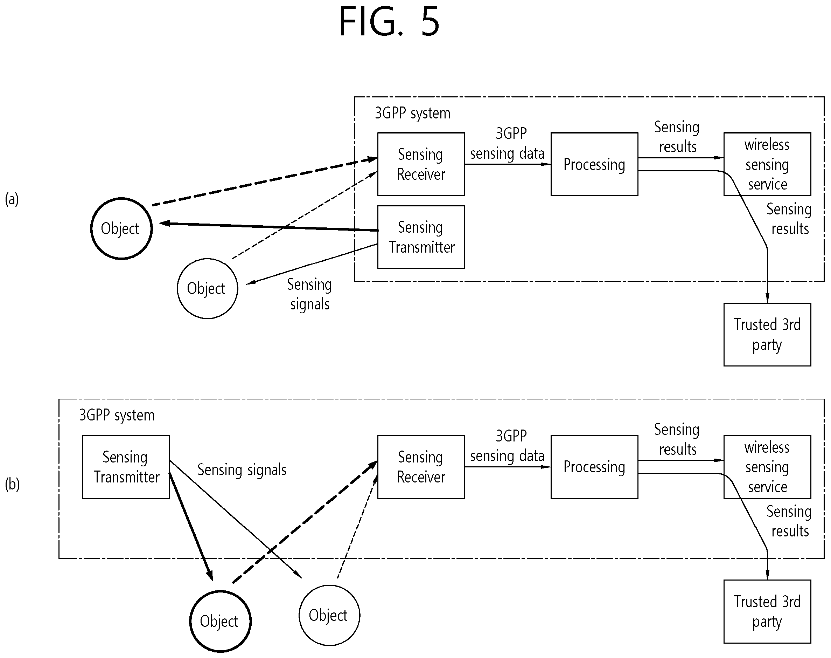

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, e.g., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, e.g., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, e.g., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (e.g., the physical layer or the PHY layer) and the second layer (e.g., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, e.g., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

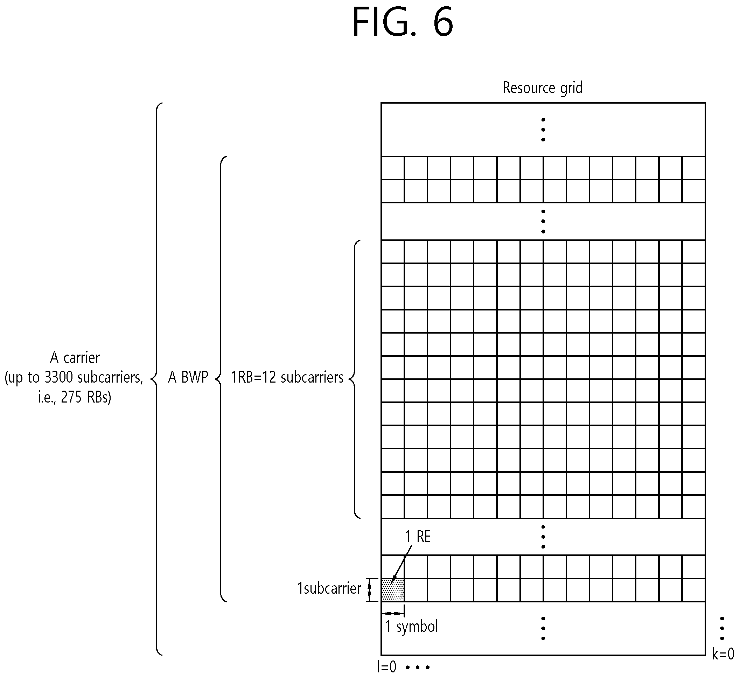

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

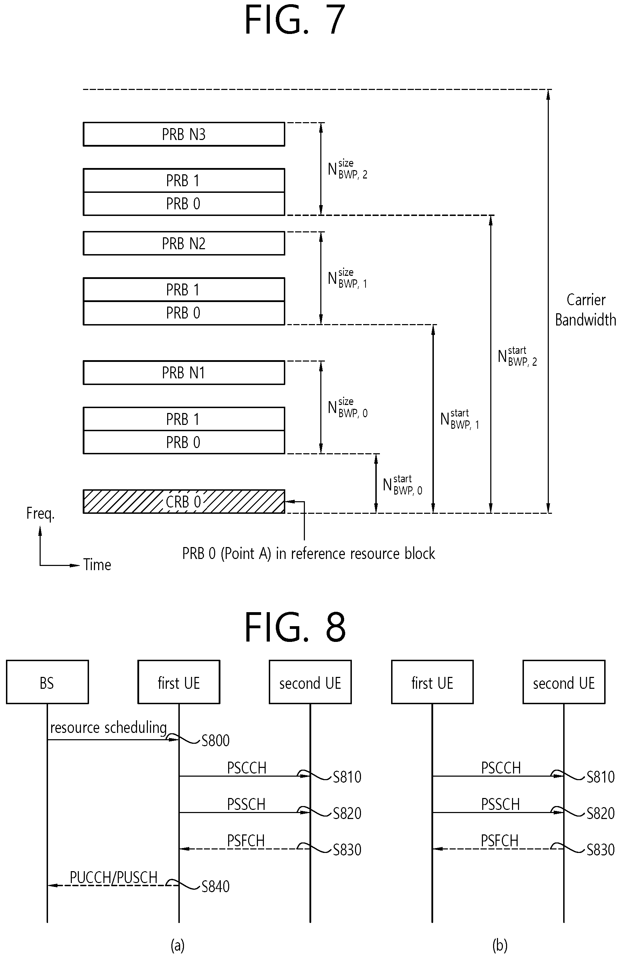

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (e.g., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to sidelink, a physical control channel related to sidelink, an inter-device physical control channel, or the like. In the present disclosure, PSSCH may be replaced with a shared channel, a physical shared channel, a shared channel related to sidelink, a physical shared channel related to sidelink, an inter-device physical shared channel, or the like. For example, SL communication may be replaced with inter-device communication. For example, in terms referring to various channels and/or signals related to SL communication, the SL portion may be replaced with "inter-device".

In the present disclosure, PUCCH may be replaced with a control channel, a physical control channel, a control channel related to uplink, a physical control channel related to uplink, a device-to-base station physical control channel, a UE-to-base station physical control channel, or the like. In the present disclosure, PUSCH may be replaced with a shared channel, a physical shared channel, a shared channel related to uplink, a physical shared channel related to uplink, a device-to-base station physical shared channel, a UE-to-base station physical shared channel, or the like. For example, UL communication may be replaced with UE-to-base station communication or device-to-base station communication. For example, in terms referring to various channels and/or signals related to UL communication, the UL portion may be replaced with "device-to-base station" or "UE-to-base station".

In the present disclosure, PDCCH may be replaced with a control channel, a physical control channel, a control channel related to downlink, a physical control channel related to downlink, a base station-to-device physical control channel, a base station-to-UE physical control channel, or the like. In the present disclosure, PDSCH may be replaced with a shared channel, a physical shared channel, a shared channel related to downlink, a physical shared channel related to downlink, a base station-to-device physical shared channel, a base station-to-UE physical shared channel, or the like. For example, DL communication may be replaced with base station-to-device communication or base station-to-UE communication. For example, in terms referring to various channels and/or signals related to DL communication, the DL portion may be replaced with "base station-to-device" or "base station-to-UE".

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

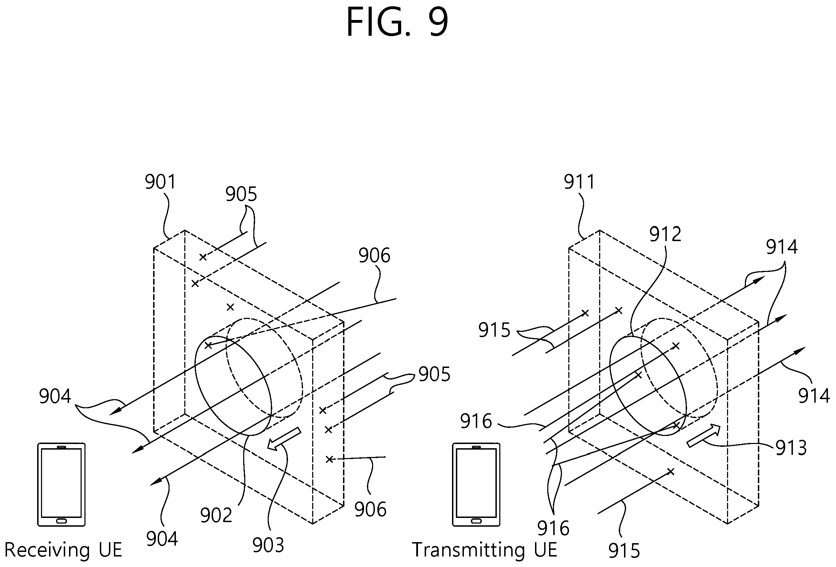

FIG. 9 shows a transmission spatial filter and a reception spatial filter, according to one embodiment of the present disclosure. The embodiment of FIG. 9 may be combined with various embodiments of the present disclosure.

Referring to FIG. 9, a reception spatial filter 901 used by a receiving UE for a reception operation and a transmission spatial filter 911 used by a transmitting UE for a transmission operation are shown.

For example, a reception spatial filter may only pass signals with the same beam direction as 903. For example, the receiving UE may only receive a transmission performed based on a beam with the direction of 903.

Thus, transmissions of 906 transmitted based on a beam with a different beam direction than the beam direction of 903 may not pass the reception spatial filter. 904 is a signal transmitted based on a beam with the same beam direction as 903, which may pass the reception spatial filter and be received by a receiving UE.

For example, a reception spatial filter may have a beam size/width of 902 and may only pass signals that are performed based on a beam that is included within the beam size/width. For example, a receiving UE may only receive transmissions that are performed based on a beam with a size/width that is included within the beam size/width of 902.

Thus, transmissions of 905 that contacted the reception spatial filter outside of the size/width of 902 may not pass the reception spatial filter among signal components transmitted based on a beam of a size/width greater than the size/width of 902. Since 904 has contacted the reception spatial filter in a region included in the size/width of 902, it may pass through the reception spatial filter and be received by a receiving UE. On the other hand, 905 has contacted the reception spatial filter outside of the size/width of 902, and therefore cannot pass the reception spatial filter and cannot be received by the receiving UE.

For example, 904 may be received by the receiving UE since its direction is the same as the direction of the beam 903 through which the reception spatial filter passes, and since it contacts the reception spatial filter in a range that is included in the size/width of 902. Here, for example, if the transmissions of 904 are all of the transmitted components based on a specific beam (e.g., all of the signal components transmitted along with 904 are successfully received by the receiving UE), then the reception spatial filter may be a spatial filter that covers the transmission spatial filter related to the specific beam.

For example, a transmission spatial filter may only pass signals that are the same as the beam direction of 913. In other words, when a transmission UE performs a transmission operation based on the transmission spatial filter, the signal components 914 that pass through the transmission spatial filter and are finally transmitted may all have the direction of 913.

Thus, transmissions of 916 transmitted based on a beam that is different from the beam direction of 913 may not pass through the transmission spatial filter. Signal components 914 with the same beam direction as 913 may pass through the transmission spatial filter and be transmitted to a receiving UE.

For example, a transmission spatial filter may have a beam size/width of 912, and may only pass signal components that are included within the beam size/width. For example, when a transmission UE performs a transmission operation based on the transmission spatial filter, only signal components that are included within the beam size/width of 912 may be passed through the transmission spatial filter and finally transmitted.

Thus, signal components that are not included in the size/width of 912 may not pass through the transmission spatial filter. Since 914 are signal components that are included in the size/width of 912, they may pass through the transmission spatial filter and be transmitted to a receiving UE. On the other hand, 915 are signal components that are not included in the size/width of 912 and therefore cannot pass through the transmission spatial filter and be transmitted to the receiving UE.

For example, the direction of 914 is the same as the beam direction 913 through which the transmission spatial filter passes, and the signal components included in the size/width of 912, it may be transmitted to a receiving UE. Here, for example, if the transmissions of 914 all pass through a reception spatial filter used by a receiving UE for receive operation (e.g., if the direction of the signal components of 914 is the same as the beam direction related to the reception spatial filter, and the signal components of 914 are all included in the size/width of the reception spatial filter), then the reception spatial filter may be a spatial filter that covers the transmission spatial filter of 911.

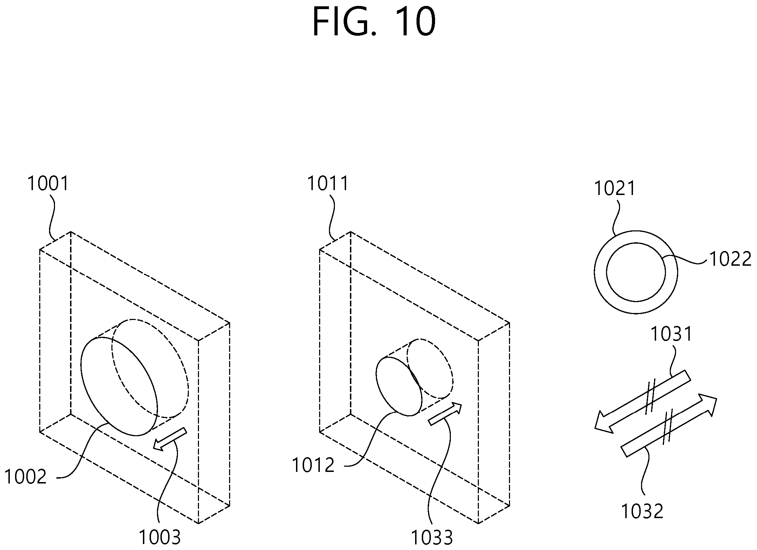

FIG. 10 shows a method for determining whether a reception spatial filter covers a transmission spatial filter, according to one embodiment of the present disclosure. The embodiment of FIG. 10 may be combined with various embodiments of the present disclosure.

Referring to FIG. 10, a reception spatial filter 1001 used by a receiving UE for a reception operation and a transmission spatial filter 1011 used by a transmitting UE for a transmission operation are shown.

For example, the direction of the signal components passed by the reception spatial filter may be 1003, and the direction of the signal components transmitted through the transmission spatial filter may be 1013. For example, the reception beam direction related to the reception spatial filter may be 1003, and the transmission beam direction related to the transmission spatial filter may be 1013.

For example, the size/width of the reception filter may be 1002. For example, the reception spatial filter passes only those signal components included in the 1002, and only those signal components that pass through the reception spatial filter may be received by a receiving UE.

For example, the size/width of the transmission spatial filter may be 1012. For example, the transmission spatial filter passes only those signal components included in the 1012, and only those signal components that pass through the transmission spatial filter may be transmitted to a receiving UE.

1021 and 1022 are cross sections of the size/width of a transmission spatial filter or the size/width of a reception spatial filter.

For example, if the 1021 is the size/width of a transmission spatial filter, the 1022 is the size/width of a reception spatial filter, and since the 1022 is included in the 1021, the size/width of the transmission spatial filter is larger than the size/width of the reception spatial filter, some of the signal components that pass through the transmission spatial filter and are transmitted to a receiving UE may not pass through the reception spatial filter. In this case, the reception spatial filter may be a spatial filter that does not cover the transmission spatial filter.

Conversely, for example, if the 1021 is the size/width of a reception spatial filter, the 1022 is the size/width of a transmission spatial filter, and since the 1022 is included in the 1021, the size/width of the transmission spatial filter is smaller than the size/width of the reception spatial filter, all of the signal components transmitted through the transmission spatial filter to a receiving UE may pass through the reception spatial filter. In this case, the reception spatial filter may be a spatial filter that covers the transmission spatial filter.

1031 represents 1003, e.g., the reception beam direction related to the reception spatial filter, and 1032 represents 1013, e.g., the transmission beam direction related to the transmission spatial filter. For example, as shown in the figure, since only when 1031 and 1032 are horizontal may all signal components transmitted by a transmitting UE based on the transmitting spatial filter pass through a receiving spatial filter, the receiving spatial filter may be the to be a spatial filter that covers the transmitting spatial filter when all signal components transmitted by the transmitting UE based on the transmitting spatial filter pass through the receiving spatial filter only when 1031 and 1032 are horizontal.

Meanwhile, in a next-generation system, communication between a base station and an automotive aerial mobility (AAM) UE may be performed, and/or communication between AAM UEs may be performed. The AAM UE may change its height (or altitude) (for example, movement in a vertical direction), and in some cases may be located lower than or higher than a height of the base station.

Meanwhile, depending on a height (or altitude) of an AAM UE, a degree of securing a line of sight (LOS) in communication between a base station and a UE may vary. In particular, when the AAM UE is located higher than a height of the base station, communication is performed in an environment in which LOS is relatively more readily secured, and thus a coverage of a cell may tend to increase.

For example, at this time, a UE-to-base station transmission (e.g., UL transmission) performed from an AAM UE may be received with high power at a plurality of cells. Also, in a base station-to-UE reception operation (e.g., DL reception) from a perspective of the AAM UE, a base station-to-UE signal (e.g., a DL signal) transmitted from a plurality of cells may be received by the UE with (relatively (compared to communication of a conventional terrestrial UE)) high power.

In an environment in which high interference as described above may occur, a reception performance of a UE for base station-to-UE transmission (e.g., DL transmission) and UE-to-base station transmission (e.g., UL transmission) may be significantly degraded.

Meanwhile, according to a conventional technology, scheduling information may not be dynamically shared between different cells, and accordingly, it may be difficult to avoid a collision of base station-to-UE communication resources (e.g., DL resources) and/or UE-to-base station communication resources (e.g., UL resources) between different cells.

For example, in the present disclosure, AAM may be replaced/substituted with an unmanned aerial mobility (UAM), a drone, or the like, which is an entity capable of aerial movement and equipped with a module capable of performing communication, or capable of performing communication.

According to an embodiment of the present disclosure, a UE, in a specific situation, may discard or ignore received UE-to-base station communication grant (e.g., UL grant) and/or aperiodic reference signal triggering base station-to-UE control information (e.g., DCI; downlink control information). For example, in the above case, UE-to-base station transmission (e.g., UL transmission) may be omitted. Alternatively, for example, upon UE-to-base station transmission (e.g., UL transmission), a power offset may be additionally applied, or a transmit power level may be reduced.

For example, the aperiodic reference signal triggering base station-to-UE control information (e.g., DCI) may include base station-to-UE control information (e.g., DCI) that triggers (transmission of) an aperiodic reference signal (e.g., a channel state information reference signal (e.g., CSI-RS; channel state information reference signal), and/or a sounding reference signal (e.g., SRS; sounding reference signal)).

For example, the specific situation may include a case in which a UE obtains masking information (per height region of the UE) through L1 signaling, L2 signaling, and/or RRC configuration, a case in which the UE is determined to be located at a height at which the masking information is valid, a case in which scheduled UE-to-base station communication resources (e.g., UL resources) are included in the masking information, and/or a case in which scheduled UE-to-base station communication resources (e.g., UL resources) are not included in the masking information.

For example, masking information related to allowing or disallowing the UE-to-base station transmission (e.g., UL transmission) (or masking information for allowing or disallowing the UE-to-base station transmission (e.g., UL transmission)) may be configured and/or applied differently per a height region of a UE, a service type, and/or a type of a UE-to-base station channel/signal (e.g., a UL channel/signal).

According to an embodiment of the present disclosure, a UE, in a specific situation, may omit a base station-to-UE physical control channel (e.g., PDCCH) monitoring operation, a base station-to-UE physical shared channel (e.g., PDSCH) reception operation, and/or a reference signal (e.g., RS; reference signal) measurement operation. Alternatively, a base station, in a specific situation, may additionally apply a power offset (to be applied) upon base station-to-UE transmission (e.g., DL transmission), or may reduce a transmit power level.

For example, the specific situation may include a case in which a UE obtains masking information (per height region of the UE) through L1 signaling, L2 signaling, and/or RRC configuration, a case in which the UE is determined to be located at a height at which the masking information is valid, a case in which scheduled/configured base station-to-UE communication resources (e.g., DL resources) are included in the masking information, and/or a case in which scheduled/configured base station-to-UE communication resources (e.g., DL resources) are not included in the masking information.

For example, masking information related to allowing or disallowing base station-to-UE transmission (e.g., DL transmission) (or masking information for allowing or disallowing base station-to-UE transmission (e.g., DL transmission)) may be configured and/or applied differently per a height region of a UE, a service type, and/or a type of a base station-to-UE channel/signal (e.g., a DL channel/signal).

Meanwhile, configured grant (e.g., CG; configured grant) information configured between different cells may be shared in a long-term manner. In the above case, the configured grant (e.g., CG) information between adjacent cells may not overlap with each other. And/or, for example, in the above case, the configured grant (e.g., CG) information configured between adjacent cells may be shared such that they do not overlap with each other.

For example, depending on a height region of a UE, a set/configuration of configured grant (e.g., CG) UE-to-base station physical shared channel (e.g., PUSCH) resources (for example, resources for UE-to-base station physical shared channel (e.g., PUSCH) transmission including information related to the configured grant (e.g., CG)) may be different and/or may be configured independently.

And/or, for example, depending on a height region of a UE, a nominal power, an alpha (a scaling factor for a pathloss term), a power offset value, and/or a power control process may be configured and/or applied differently.

For example, a UE may use a first configured grant (e.g., CG) UE-to-base station physical shared channel (e.g., PUSCH) resource configuration in a first height region, and/or may use a second configured grant (e.g., CG) UE-to-base station physical shared channel (e.g., PUSCH) resource configuration in a second height region.

For example, a UE may use a first configured grant (e.g., CG) UE-to-base station physical shared channel (e.g., PUSCH) resource configuration in a first height region, and/or may use a second configured grant (e.g., CG) UE-to-base station physical shared channel (e.g., PUSCH) resource configuration in a second height region.

For example, a UE may perform communication by using a first configured grant (e.g., CG) UE-to-base station physical shared channel (e.g., PUSCH) resource configuration in a first height region, and/or may perform communication by using a second configured grant (e.g., CG) UE-to-base station physical shared channel (e.g., PUSCH) resource configuration in a second height region.

For example, a second configured grant (e.g., CG) UE-to-base station physical shared channel (e.g., PUSCH) resource set may be in a form of a subset of a first configured grant (e.g., CG) UE-to-base station physical shared channel (e.g., PUSCH) resources, and/or may be indicated in a form of masking information for the first configured grant (e.g., CG) UE-to-base station physical shared channel (e.g., PUSCH) resource set (through L1 and/or L2 signaling) and/or may be configured in a form of masking information (through a MAC (medium access control) layer and/or RRC).

For example, RRC configuration for a configured grant (e.g., CG) UE-to-base station physical shared channel (e.g., PUSCH) and/or activation/release base station-to-UE control information (e.g., DCI) (for example, base station-to-UE control information (e.g., DCI) indicating activation or release of the configured grant (e.g., CG)) may include a height region or mobility information of a UE in which configured grant (e.g., CG) resources may be used, or are valid.

For example, a height region or mobility information of a UE, in which configured grant (e.g., CG) resources may be used, or are valid, may be configured through RRC configuration for a configured grant (e.g., CG) UE-to-base station physical shared channel (e.g., PUSCH) and/or activation/release base station-to-UE control information (e.g., DCI).

According to an embodiment of the present disclosure, depending on a height of a UE, a set/configuration of base station-to-UE semi-persistent scheduling (e.g., DL SPS; downlink semi-persistent scheduling) resources (for example, resources allocated by semi-persistent scheduling (e.g., SPS) by a base station) may be different and/or may be configured independently.

For example, a UE may use based on a first base station-to-UE semi-persistent scheduling (e.g., DL SPS) resource configuration in a first height region, and/or may use based on a second base station-to-UE semi-persistent scheduling (e.g., DL SPS) resource configuration in a second height region.

For example, a UE may use a first base station-to-UE semi-persistent scheduling (e.g., DL SPS) resource configuration in a first height region, and/or may use a second base station-to-UE semi-persistent scheduling (e.g., DL SPS) resource configuration in a second height region.

For example, a UE may perform communication by using a first base station-to-UE semi-persistent scheduling (e.g., DL SPS) resource configuration in a first height region, and/or may perform communication by using a second base station-to-UE semi-persistent scheduling (e.g., DL SPS) resource configuration in a second height region.

For example, a second base station-to-UE semi-persistent scheduling (e.g., DL SPS) resource set may be in a form of a subset of a first base station-to-UE semi-persistent scheduling (e.g., DL SPS) resources, and/or may be indicated in a form of masking information for the first base station-to-UE semi-persistent scheduling (e.g., DL SPS) resource set (through L1 and/or L2 signaling) and/or may be configured in a form of masking information (through a MAC layer and/or RRC).

For example, RRC configuration for base station-to-UE semi-persistent scheduling (e.g., DL SPS) and/or activation/release base station-to-UE control information (e.g., DCI) may include a height region or mobility information of a UE in which base station-to-UE semi-persistent scheduling (e.g., DL SPS) resources may be used or are valid.

For example, a height region or mobility information of a UE, in which base station-to-UE semi-persistent scheduling (e.g., DL SPS) resources may be used or are valid, may be configured through RRC configuration for base station-to-UE semi-persistent scheduling (e.g., DL SPS) and/or activation/release base station-to-UE control information (e.g., DCI).

Meanwhile, depending on a height region of a UE, cell planning/configuration may be different. For example, depending on the height region, different physical cell identifiers (e.g., PCID; physical cell identifier) may be used and/or a scrambling ID and/or a sequence ID may be configured/applied independently. For example, depending on the height region, a physical cell identifier (e.g., PCID) may be different, and/or a scrambling ID and/or a sequence ID may be configured/applied independently.

For example, in a case of a low height region, cells may have different physical cell identifiers (e.g., PCID), and/or scrambling IDs and/or sequence IDs configured differently between cells may be used. For example, in a case of a high height region, a plurality of cells may have the same (separate) physical cell identifier (e.g., PCID), and/or the same scrambling ID and/or sequence ID may be used in the plurality of cells.

Meanwhile, according to an embodiment of the present disclosure, depending on a height region of a UE, a plurality of cells may operate as a mega cell.

For example, (in the above situation) a plurality of cells may share the same time and/or frequency region with each other. For example, (in the above situation) at least a scheduler may be dynamically shared among the plurality of cells.

For example, (in the above situation) a specific control resource set (e.g., CORESET; control resource set) and/or a search space may be (identically) shared for a cell group.

For example, (in the above situation) a base station-to-UE signal/channel (e.g., a DL signal/channel) may be transmitted identically to a UE by a cell group (or cells in the cell group), and/or may be transmitted by a specific subset (or a set, a subset, or a subset thereof) of cells, and the information may be indicated/configured through base station-to-UE control information (e.g., DCI) indication, MAC, and/or RRC. For example, the base station-to-UE signal/channel may include a base station-to-UE physical control channel (e.g., PDCCH), a base station-to-UE physical shared channel (e.g., PDSCH), a channel state information reference signal (e.g., CSI-RS), a phase tracking reference signal (e.g., PT-RS; phase tracking reference signal), a positioning reference signal (e.g., PRS; positioning reference signal), or the like.

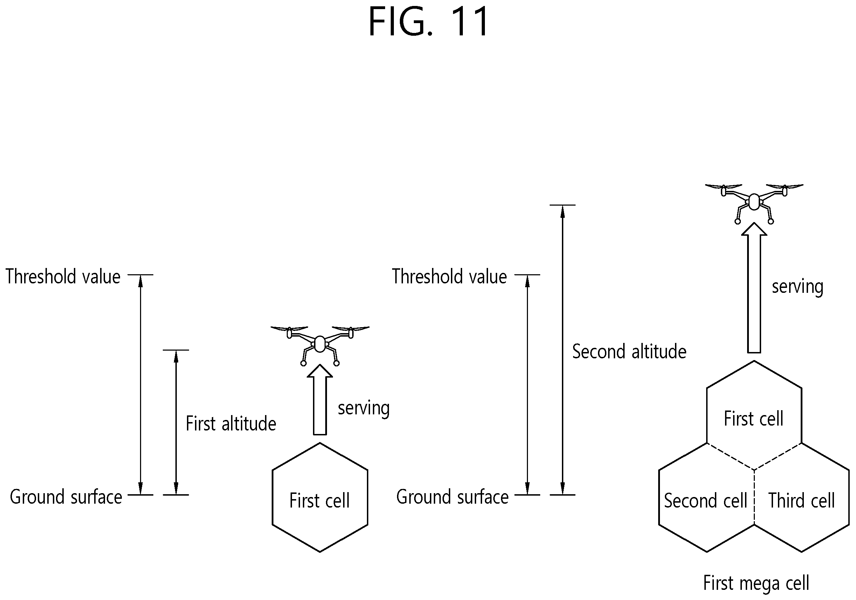

FIG. 11 shows a type of a cell serving a device, which is changed according to an altitude of the device, according to an embodiment of the present disclosure. The embodiment of FIG. 11 may be combined with various embodiments of the present disclosure.

Referring to FIG. 11, a first device capable of moving in a vertical direction and performing communication is shown. For example, when an altitude of the first device is a first altitude, since the first altitude is less than a threshold value, the first device may be served by a first cell, which is a normal cell.

Alternatively, for example, when an altitude of the first device is a second altitude, since the second altitude is greater than the threshold value, the first device may be served by a first mega cell composed of a first cell to a third cell.

This may be for resolving a problem related to interference, which may occur in performing communication between the device and a base station, because, when an altitude of the first device becomes higher than a certain level, a number of base stations (or cells) for which LOS is secured from a perspective of the first device becomes excessively large. In the present embodiment, although a number of cells constituting a mega cell is exemplified as three, the number of cells constituting the mega cell may be extended to a plurality of integers other than three according to a configuration. For example, the number of cells constituting the mega cell may be set differently according to a configuration, depending on a region in which an altitude of the device is included (for example, a region between a ground and a first threshold value, a region between the first threshold value and a second threshold value, a region including an altitude greater than or equal to the second threshold value, etc.).

At this time, scheduling information or information related to communication may be shared among a plurality of cells (or base stations) constituting a mega cell. For example, sharing of scheduling information or information related to communication may be performed by various schemes described in the present disclosure.

According to an embodiment of the present disclosure, an AAM UE may receive base station-to-UE reference signals (e.g., DL RSs) from a single cell or a plurality of cells, and may transmit, for a first cell, channel state information (e.g., CSI) (in a direction of increasing reliability for data reception in reporting information related to the channel state information (e.g., CSI)), and/or may transmit, for a second cell, channel state information (e.g., CSI) (in a direction of reducing interference in reporting information related to the channel state information (e.g., CSI)). For example, the first cell may be a cell serving the AAM UE, and the second cell may be a cell different from the first cell. Alternatively, for example, the second cell may be a cell serving the AAM UE, and the first cell may be a cell different from the second cell. For example, the first cell may be a cell related to a first base station, and the second cell may be a cell related to a second base station.

For example, in the above, channel state information (e.g., CSI) may include a rank indicator (e.g., RI; rank indicator), and/or a precoding matrix indicator (e.g., PMI; precoding matrix indicator), and/or a channel quality indicator (e.g., CQI; channel quality indicator), and/or beam information.

For example, channel state information (e.g., CSI) in a direction of increasing reliability for data reception may refer to channel state information (e.g., CSI) related to a case (or a reference signal) in which a measurement value related to reliability (or a degree of reliability) among a plurality of channel state information (e.g., CSI) is greater than or equal to a threshold value.

For example, channel state information (e.g., CSI) in a direction of reducing interference may refer to channel state information (e.g., CSI) related to a case (or a reference signal) in which a measurement value related to interference (or a degree of interference) among a plurality of channel state information (e.g., CSI) is less than or equal to a threshold value.

For example, in the present disclosure, beam information may include information related to a beam. For example, the beam information may include information related to a direction, a power, a beam identifier, or a width of a corresponding beam. For example, the beam information may include information related to a spatial filter related to the corresponding beam.

For example, a UE may receive a reference signal (e.g., RS) from a single cell or a plurality of cells, and information related thereto may be provided from a specific cell or from each cell.

For example, a UE may transmit a channel state information (e.g., CSI) report for a second cell to a first cell, and/or the first cell may provide information related thereto to the second cell. In the above case, the channel state information (e.g., CSI) report may include information indicating which cell the information corresponds to (for example, a physical cell identifier (e.g., PCID)).

For example, information related to channel state information (e.g., CSI) in a direction of increasing reliability for data reception may consider maximizing spectral efficiency and/or satisfying a block error rate (e.g., BLER; block error rate) requirement. For example, the information related to channel state information (e.g., CSI) in a direction of increasing reliability for data reception may be channel state information (e.g., CSI) related to a case (or a reference signal) in which spectral efficiency is maximized and/or a case (or a reference signal) in which a block error rate (e.g., BLER) requirement is satisfied.

For example, information related to channel state information (e.g., CSI) in a direction of reducing interference may be in a form of a single set, a set for information related to non-preferred channel state information (e.g., CSI), and/or a set for information related to preferred channel state information (e.g., CSI). Alternatively, the information related to channel state information (e.g., CSI) in a direction of reducing interference may be information for a preferred and/or non-preferred transmission scheme. For example, information reported by a UE (to a first cell) may be provided by the first cell to a second cell. For example, when a UE reports information to a first cell, the first cell may provide information related to its received information to a second cell.

For example, information related to channel state information (e.g., CSI) for the interference may be in a form of information related to channel state information (e.g., CSI) and/or beam information for a case in which an interference level is greater than or equal to, or exceeds, a certain level. For example, the information related to channel state information (e.g., CSI) for the interference may include channel state information (e.g., CSI) and/or beam information related to a case (or a reference signal) in which an interference level is greater than or equal to, or exceeds, a certain level.

For example, information related to channel state information (e.g., CSI) for the interference may be in a form of information related to channel state information (e.g., CSI) and/or beam information for a case in which an interference level is less than or equal to, or less than, a certain level. For example, the information related to channel state information (e.g., CSI) for the interference may include channel state information (e.g., CSI) and/or beam information related to a case (or a reference signal) in which an interference level is less than or equal to, or less than, a certain level.

For example, the interference level may include a quantity of a reference signal received power (e.g., RSRP; reference signal received power), a reference signal strength indicator (e.g., RSSI; reference signal strength indicator), a reference signal received quality (e.g., RSRQ; reference signal received quality), and/or a signal-to-interference-plus-noise ratio (e.g., SINR; signal-to-interference-plus-noise ratio).

For example, the certain level may be configured through RRC, indicated through L2 signaling, indicated through L1 signaling, and/or may be a value selected by a UE.

For example, measurement of channel state information (e.g., CSI), reporting of channel state information (e.g., CSI), and/or generation and/or reporting of information related to channel state information (e.g., CSI) in a direction of reducing the interference may be different or independent depending on a traffic type, a quality of service (e.g., QoS; quality of service), a height region of a UE, and/or mobility information of the UE.

For example, generation and/or reporting of information related to channel state information (e.g., CSI) (in a direction of reducing the interference) may be limited to being performed when a UE is in a specific height region (for example, when an altitude of the UE is greater than or equal to, or exceeds, a threshold value predefined or configured by a base station (through RRC, etc.), and/or when the altitude of the UE is determined to be within a region predefined or configured by the base station (through RRC, etc.)).

For example, a configuration, indication, and/or selection scheme may be different or independent according to a traffic type, quality of service (e.g., QoS), a height region of a UE, and/or mobility information of the UE, etc.

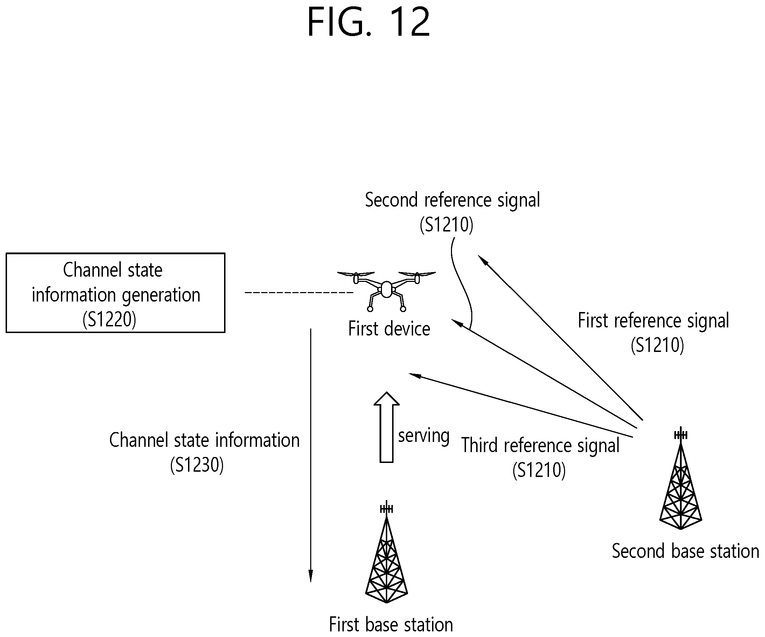

FIG. 12 shows a procedure in which a device generates and reports channel state information (e.g., CSI) based on a plurality of reference signals, according to an embodiment of the present disclosure. The embodiment of FIG. 12 may be combined with various embodiments of the present disclosure.

Referring to FIG. 12, a first device capable of moving in a vertical direction and performing communication, a first base station serving the first device, and a second base station different from the first base station are shown.

In step S1210, the second base station may transmit, to the first device, a plurality of reference signals including a first reference signal to a third reference signal. For example, the plurality of reference signals may include various reference signals described in the present disclosure. For example, the plurality of reference signals may include reference signals that may be used to measure a channel state.

In step S1220, the first device may perform measurement for the plurality of reference signals and generate channel state information (e.g., CSI) according to various methods described in the present disclosure. For example, the channel state information (e.g., CSI) may include channel state information (e.g., CSI) in a direction of reducing interference and/or channel state information (e.g., CSI) in a direction of increasing reliability. For example, when a reference signal having a highest measurement value related to a degree of reliability, or a reference signal having a measurement value related to a degree of reliability equal to or greater than a threshold value, is the first reference signal, the first device may generate the channel state information (e.g., CSI) based on the first reference signal. For example, when a reference signal having a lowest measurement value related to a degree of interference, or a reference signal having a measurement value related to a degree of interference equal to or less than a threshold value, is the first reference signal and the second reference signal, the first device may generate the channel state information (e.g., CSI) based on the first reference signal and the second reference signal.

Here, for example, reliability and interference may be related to communication performed between the first device and the first base station. For example, the reliability may refer to reliability related to communication performed between the first device and the first base station when considering an influence of communication performed (or to be performed) by the second base station. For example, the interference may refer to interference capable of affecting communication performed between the first device and the first base station when considering an influence of communication performed (or to be performed) by the second base station.

In step S1230, the first device may report generated channel state information to the first base station, which is a base station of a cell serving the first device. For example, based on the channel state information, the first base station may adjust an operation or a configuration related to communication with the first device by considering an influence (reliability or interference) of the second base station on communication between the first device and the first base station.

Although an operation according to a height of a UE has been described in an embodiment of the present disclosure, the idea of the present disclosure may also be extended and applied to an operation according to a location of a UE according to an x-axis coordinate, a y-axis coordinate, and/or another coordinate system of the UE in addition to the height of the UE.

In an embodiment of the present disclosure, description for a height of a UE is only an embodiment, and description for the height may be replaced with or extended to description for a pressure, a water pressure, a relative height from a base station height, a (vertical) distance from a ground surface, and/or a form of a zone (Zone), etc.

In an embodiment of the present disclosure, whether an AAM UE performs a different operation per height may be determined according to an actual height of the UE, may be determined in an application layer or a higher layer according to the height of the UE, and/or may be determined according to an update time point of height information based on exchanged information between the UE and a base station or a time point thereof.

Various schemes described in the present disclosure may be differently applied per link (base station-to-UE link (e.g., DL link), UE-to-base station link (e.g., UL link), or inter-UE link (e.g., SL link; sidelink link)), cell, carrier, unicast session (group), cast type, transmission priority value, reception priority value, inter-UE feedback (e.g., SL HARQ-ACK feedback)-enabled/disabled inter-UE transmission (e.g., SL transmission), inter-UE feedback (e.g., SL HARQ-ACK feedback) option, quality of service (e.g., QoS) parameter, (remaining) packet delay budget (e.g., PDB; packet delay budget), congestion control level, (transmission and/or reception) resource pool, UE mobility-related information (for example, speed, velocity, direction, acceleration, location, height, path, etc.), transmission or reception operation of inter-UE communication (e.g., SL communication), HARQ process, beam process, Source ID, Destination ID, and/or transport block (e.g., TB; transport block).

For example, in an embodiment of the present disclosure, a unit of (pre-)configuration may be configured in a form of the different combination. For example, in an embodiment of the present disclosure, indication and management of a parameter through an inter-UE physical control channel (e.g., PSCCH) and/or an inter-UE physical shared channel (e.g., PSSCH) may be performed in units of the form of the different combination. For example, the different combination may refer to a combination of a plurality of elements among the above elements.

In an embodiment of the present disclosure, (pre-)configuration may refer to pre-configuration (based on signaling from a server or at a time of product shipment), configuration from a base station, or configuration through PC5-RRC between UEs.

In an embodiment of the present disclosure, an AAM UE may be (or may represent) a UE in which a location of the UE may be various in a vertical direction (or capable of moving in a vertical direction, or mounted on an object capable of moving in a vertical direction), a UE operating (or capable of operating) in an environment having various pressures, a UE operating (or capable of operating) in an environment having various water pressures, and/or a UE operating (or capable of operating) in a situation having various surrounding environments such as temperatures, and the idea of the present disclosure may be extended and applied to a UE in various situations and/or environments.

Various schemes described in the present disclosure may be differently applied per inter-UE communication channel (e.g., SL channel). Various schemes described in the present disclosure may be differently applied according to a type of information included in the inter-UE communication channel (e.g., SL channel).

The proposed method may be applied to devices described below. First, a processor (202) of a receiving UE may configure at least one bandwidth part (e.g., BWP; bandwidth part). And, the processor (202) of the receiving UE may control a transceiver (206) of the receiving UE to receive, from a transmitting UE, an inter-UE communication (e.g., SL communication)-related physical channel and/or an inter-UE communication (e.g., SL communication)-related reference signal on the at least one bandwidth part (e.g., BWP).

Advanced air mobility (AAM) (or air mobility) is a term including urban air mobility (UAM) (or urban air mobility), regional air mobility (RAM) (or regional air mobility), etc., and may have a characteristic of moving in air and function as a subject performing wireless communication.

Here, when AAM functions as a subject performing wireless communication, a UE performing a communication function may be referred to as an AAM UE. For example, as a height (altitude) of the AAM UE increases, UE-to-base station transmission (e.g., UL transmission) may be received at high power in a plurality of cells, and base station-to-UE transmission (e.g., DL transmission) of the plurality of cells may be received at high power at the AAM UE side.

For example, in a situation in which scheduling information is not dynamically shared between cells, it may be difficult to avoid a resource collision between base station-to-UE communication (e.g., DL communication) and UE-to-base station communication (e.g., UL communication) in consideration of an altitude of an AAM UE.

According to an embodiment of the present disclosure, a UE may receive reference signals (e.g., RS; reference signal) for channel state information (e.g., CSI; channel state information) from a plurality of cells, and may generate and report channel state information (e.g., CSI) information in a direction for mitigating interference when generating channel state information (e.g., CSI) for reference signals (e.g., RS) transmitted by a cell that is not a serving cell.

According to an embodiment of the present disclosure, base station-to-UE (e.g., DL) semi-persistent scheduling (e.g., SPS; semi-persistent scheduling)/configured UE-to-base station (e.g., UL) resources that are valid (or applicable) according to a height may be different.

According to an embodiment of the present disclosure, an AAM UE may (separately) measure (and/or generate) and report channel state information (e.g., CSI) for increasing reliability and channel state information (e.g., CSI) in a direction of reducing interference.

According to various embodiments described in the present disclosure, an effect of efficiently managing interference between different cells may be achieved even when a height of an AAM UE is high.

In addition, for example, even when a height of an AAM UE is high, an effect of increasing performance of a desired signal while reducing interference may be achieved based on appropriate channel state information (e.g., CSI).

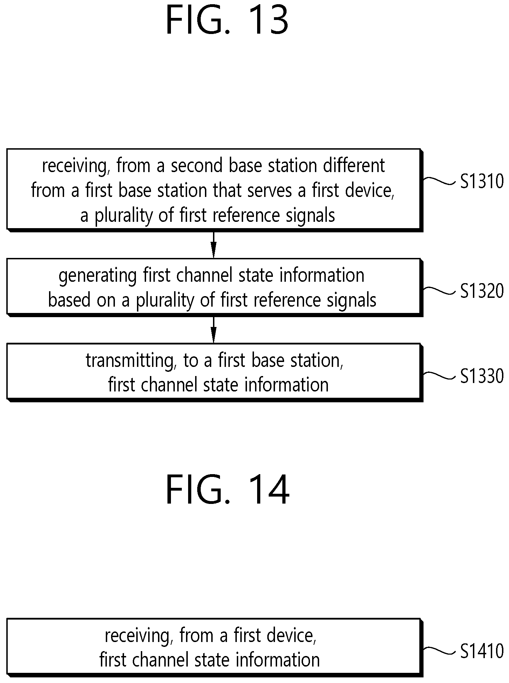

FIG. 13 shows a procedure of a method that may be performed by a first device, according to an embodiment of the present disclosure. The embodiment of FIG. 13 may be combined with various embodiments of the present disclosure.

Referring to FIG. 13, in step S1310, a first device may receive, from a second base station different from a first base station that serves the first device, a plurality of first reference signals. In step S1320, the first device may generate first channel state information based on the plurality of first reference signals. For example, the first channel state information may be information for at least one channel state that causes a lowest interference for communication between the first device and the first base station, among a plurality of first channel states related to the plurality of first reference signals. In step S1330, the first device may transmit, to the first base station, the first channel state information.

For example, the first channel state information may be delivered to a second base station by the first base station.

For example, the first channel state information may include information related to whether an interference level related to the at least one channel state is less than or equal to a threshold value.

For example, the first channel state information may include at least one of information for a rank indicator, RI, information for a precoding matrix indicator, PMI, information for a channel quality indicator, CQI, or beam information.

For example, additionally, the first device may: receive, from the first base station, a plurality of second reference signals; generate second channel state information based on the plurality of second reference signals; and transmit, to the first base station, the second channel state information.

For example, the second channel state information may be information for at least one channel state that ensures highest reliability for the communication between the first device and the first base station.

For example, the highest reliability may be ensured based on maximizing spectral efficiency or satisfying a block error rate, BLER, requirement.

For example, the first channel state information may include a physical cell identifier, PCID, related to the second base station.

For example, a first cell related to the first base station may be a mega cell including a plurality of cells, based on an altitude of the first device being greater than or equal to a threshold value.

For example, at least one of a time region or a frequency region, between the plurality of cells, may be shared.

For example, a resource scheduler between the plurality of cells may be dynamically shared.

For example, at least one of a control resource set, CORESET, or a search space, between the plurality of cells, may be shared.

The above-described embodiment may be applied to various devices described below. First, a processor 102 of a first device 100 may control a transceiver 106 to receive, from a second base station 300 different from a first base station 200 that serves the first device 100, a plurality of first reference signals. And, the processor 102 of the first device 100 may generate first channel state information based on the plurality of first reference signals. For example, the first channel state information may be information for at least one channel state that causes a lowest interference for communication between the first device 100 and the first base station 200, among a plurality of first channel states related to the plurality of first reference signals. And, the processor 102 of the first device 100 may control the transceiver 106 to transmit, to the first base station 200, the first channel state information.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: receive, from a second base station different from a first base station that serves the first device, a plurality of first reference signals; generate first channel state information based on the plurality of first reference signals, wherein the first channel state information may be information for at least one channel state that causes a lowest interference for communication between the first device and the first base station, among a plurality of first channel states related to the plurality of first reference signals; and transmit, to the first base station, the first channel state information.

For example, the first channel state information may be delivered to a second base station by the first base station.

For example, the first channel state information may include information related to whether an interference level related to the at least one channel state is less than or equal to a threshold value.

For example, the first channel state information may include at least one of information for a rank indicator, RI, information for a precoding matrix indicator, PMI, information for a channel quality indicator, CQI, or beam information.

For example, additionally, the instructions, based on being executed by the at least one processor, cause the first device to: receive, from the first base station, a plurality of second reference signals; generate second channel state information based on the plurality of second reference signals; and transmit, to the first base station, the second channel state information.

For example, the second channel state information may be information for at least one channel state that ensures highest reliability for the communication between the first device and the first base station.

For example, the highest reliability may be ensured based on maximizing spectral efficiency or satisfying a block error rate, BLER, requirement.

For example, the first channel state information may include a physical cell identifier, PCID, related to the second base station.

For example, a first cell related to the first base station may be a mega cell including a plurality of cells, based on an altitude of the first device being greater than or equal to a threshold value.

For example, at least one of a time region or a frequency region, between the plurality of cells, may be shared.

For example, a resource scheduler between the plurality of cells may be dynamically shared.

For example, at least one of a control resource set, CORESET, or a search space, between the plurality of cells, may be shared.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: receive, from a second base station different from a first base station that serves the first device, a plurality of first reference signals; generate first channel state information based on the plurality of first reference signals, wherein the first channel state information may be information for at least one channel state that causes a lowest interference for communication between the first device and the first base station, among a plurality of first channel states related to the plurality of first reference signals; and transmit, to the first base station, the first channel state information.

According to an embodiment of the present disclosure, a non-transitory computer-readable storage medium storing instructions may be proposed. For example, the instructions, when executed, may cause a first device to: receive, from a second base station different from a first base station that serves the first device, a plurality of first reference signals; generate first channel state information based on the plurality of first reference signals, wherein the first channel state information may be information for at least one channel state that causes a lowest interference for communication between the first device and the first base station, among a plurality of first channel states related to the plurality of first reference signals; and transmit, to the first base station, the first channel state information.

FIG. 14 shows a procedure of a method that may be performed by a second device, according to an embodiment of the present disclosure. The embodiment of FIG. 14 may be combined with various embodiments of the present disclosure.

Referring to FIG. 14, in step S1410, a second device may receive, from a first device, first channel state information. For example, the first channel state information may be information for at least one channel state that causes a lowest interference for communication between the first device and the second device, among a plurality of first channel states related to a plurality of first reference signals, the first channel state information may be generated based on the plurality of first reference signals, the plurality of first reference signals may be transmitted by a third device to the first device, and the first device may be served by the second device.

For example, additionally, the second device may transmit, to the third device, the first channel state information.

The above-described embodiment may be applied to various devices described below. First, a processor 202 of a second device 200 may control a transceiver 206 to receive, from a first device 100, first channel state information. For example, the first channel state information may be information for at least one channel state that causes a lowest interference for communication between the first device 100 and the second device 200, among a plurality of first channel states related to a plurality of first reference signals, the first channel state information may be generated based on the plurality of first reference signals, the plurality of first reference signals may be transmitted by a third device 300 to the first device 100, and the first device 100 may be served by the second device 200.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, first channel state information, wherein the first channel state information may be information for at least one channel state that causes a lowest interference for communication between the first device and the second device, among a plurality of first channel states related to a plurality of first reference signals, wherein the first channel state information may be generated based on the plurality of first reference signals, wherein the plurality of first reference signals may be transmitted by a third device to the first device, and wherein the first device may be served by the second device.

For example, additionally, the instructions, based on being executed by the at least one processor, may cause the second device to: transmit, to the third device, the first channel state information.

For example, in the above, a second device may be a base station (or, for example, a first base station). For example, in the above, a third device may be a base station (or, for example, a second base station)

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

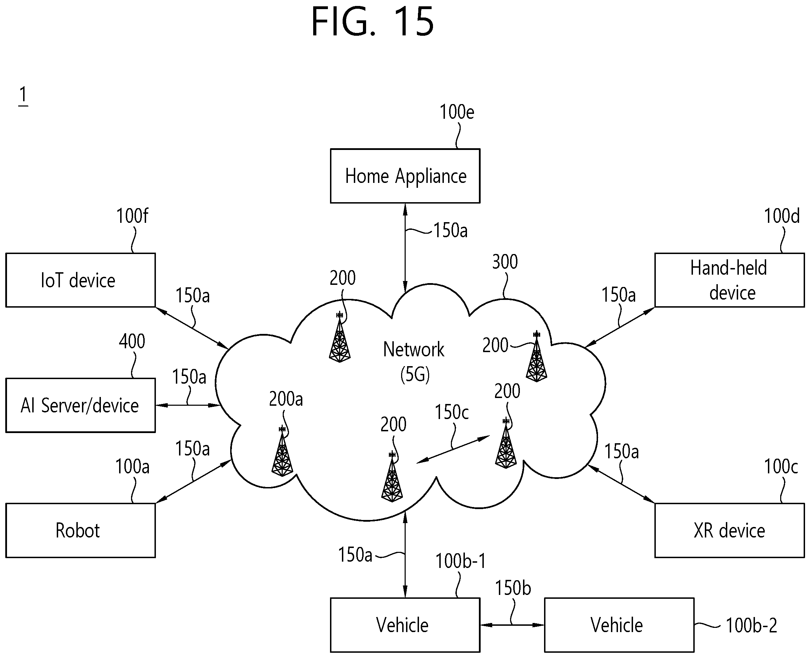

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

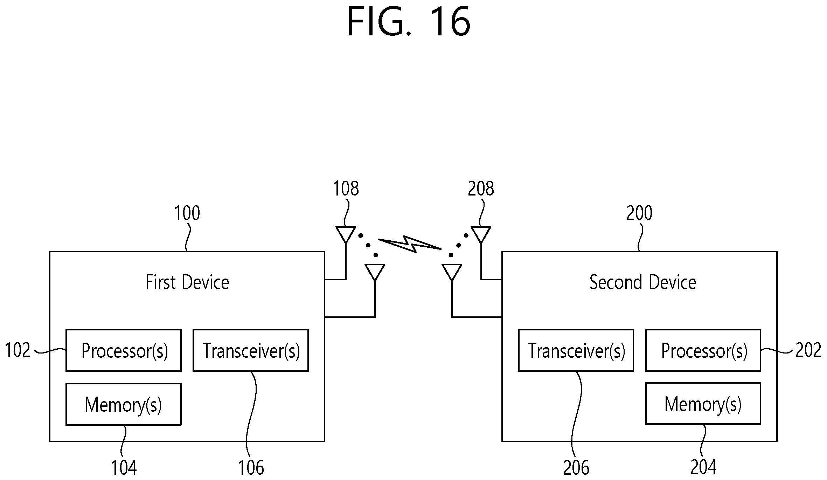

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

For example, in the following, description for a first wireless device (or apparatus) and a second wireless device (or apparatus) may be extended to a wireless device (or apparatus) corresponding to a third wireless device 300 (or apparatus) or a subsequent reference number. For example, a reference number of a processor of the third wireless device 300 may be 302, and a reference number of a transceiver may be 306.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

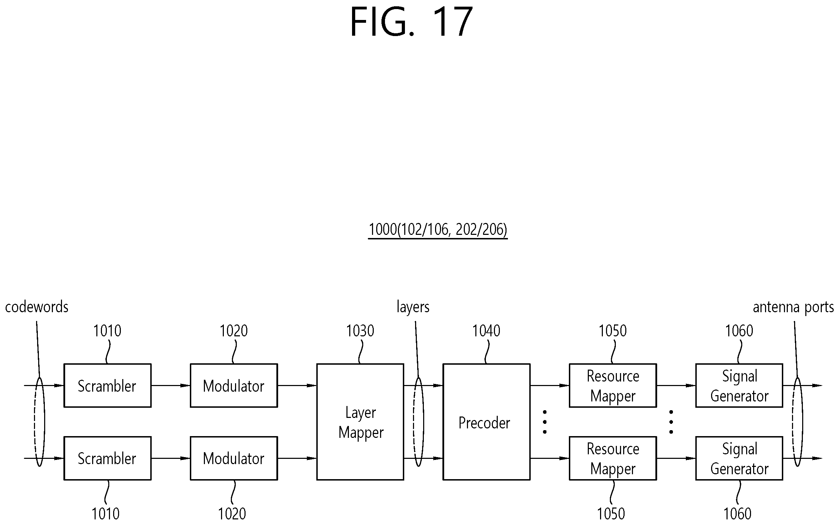

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

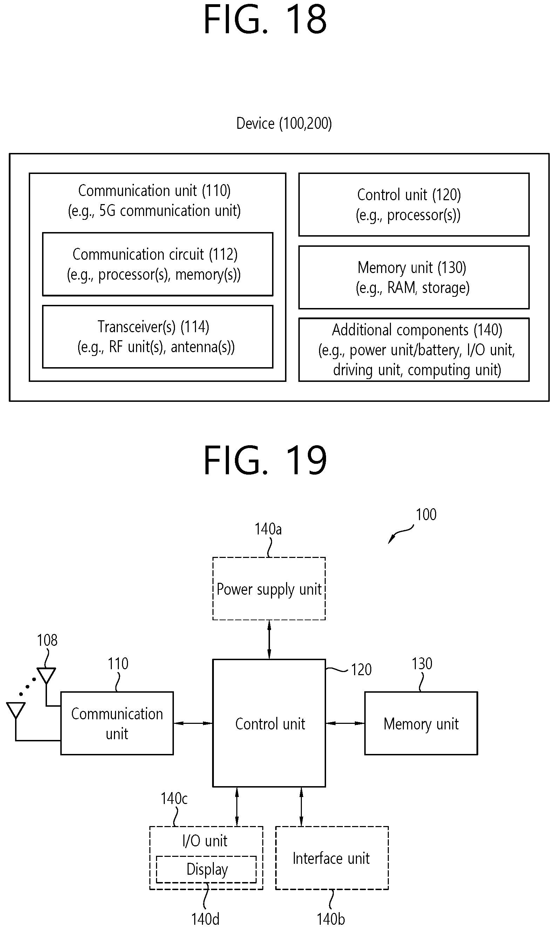

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

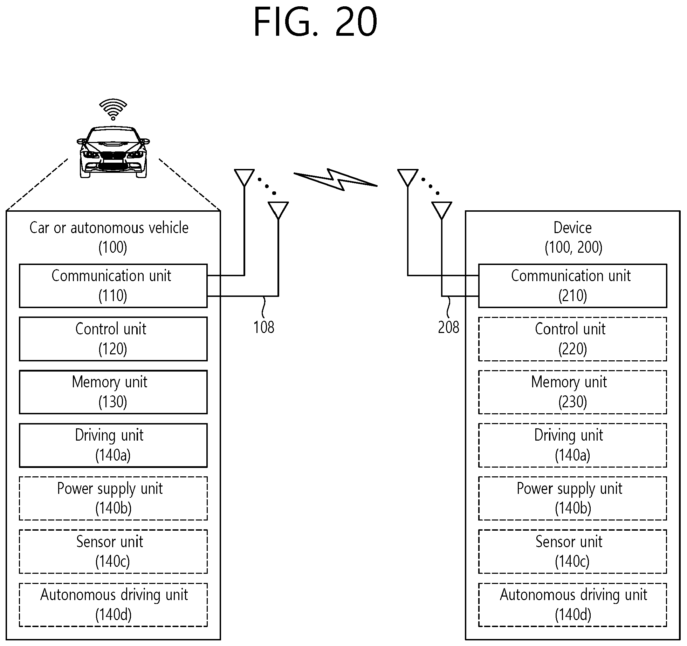

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
receiving, from a second base station different from a first base station that serves a first device, a plurality of first reference signals;
generating first channel state information based on the plurality of first reference signals,
wherein the first channel state information is information for at least one channel state that causes a lowest interference for communication between the first device and the first base station, among a plurality of first channel states related to the plurality of first reference signals; and
transmitting, to the first base station, the first channel state information.

2. The method of claim 1, wherein the first channel state information is delivered to a second base station by the first base station.

3. The method of claim 1, wherein the first channel state information includes information related to whether an interference level related to the at least one channel state is less than or equal to a threshold value.

4. The method of claim 1, wherein the first channel state information includes at least one of information for a rank indicator, RI, information for a precoding matrix indicator, PMI, information for a channel quality indicator, CQI, or beam information.

5. The method of claim 1, further comprising:
receiving, from the first base station, a plurality of second reference signals;
generating second channel state information based on the plurality of second reference signals; and
transmitting, to the first base station, the second channel state information.

6. The method of claim 5, wherein the second channel state information is information for at least one channel state that ensures highest reliability for the communication between the first device and the first base station.

7. The method of claim 6, wherein the highest reliability is ensured based on maximizing spectral efficiency or satisfying a block error rate, BLER, requirement.

8. The method of claim 1, wherein the first channel state information includes a physical cell identifier, PCID, related to the second base station.

9. The method of claim 1, wherein a first cell related to the first base station is a mega cell including a plurality of cells, based on an altitude of the first device being greater than or equal to a threshold value.

10. The method of claim 9, wherein at least one of a time region or a frequency region, between the plurality of cells, is shared.

11. The method of claim 9, wherein a resource scheduler between the plurality of cells is dynamically shared.

12. The method of claim 9, wherein at least one of a control resource set, CORESET, or a search space, between the plurality of cells, is shared.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
receive, from a second base station different from a first base station that serves the first device, a plurality of first reference signals;
generate first channel state information based on the plurality of first reference signals,
wherein the first channel state information is information for at least one channel state that causes a lowest interference for communication between the first device and the first base station, among a plurality of first channel states related to the plurality of first reference signals; and
transmit, to the first base station, the first channel state information.

15. A processing device adapted to control a first device comprising:
at least one processor; and
at least one memory connected to the at least one processor and storing instructions,
wherein the instructions, based on being executed by the at least one processor, cause the first device to:
receive, from a second base station different from a first base station that serves the first device, a plurality of first reference signals;
generate first channel state information based on the plurality of first reference signals,
wherein the first channel state information is information for at least one channel state that causes a lowest interference for communication between the first device and the first base station, among a plurality of first channel states related to the plurality of first reference signals; and
transmit, to the first base station, the first channel state information.

16. A non-transitory computer-readable storage medium storing instructions that, when executed, cause a first device to:
receive, from a second base station different from a first base station that serves the first device, a plurality of first reference signals;
generate first channel state information based on the plurality of first reference signals,
wherein the first channel state information is information for at least one channel state that causes a lowest interference for communication between the first device and the first base station, among a plurality of first channel states related to the plurality of first reference signals; and
transmit, to the first base station, the first channel state information.

17. A method comprising:
receiving, from a first device, first channel state information,
wherein the first channel state information is information for at least one channel state that causes a lowest interference for communication between the first device and a second device, among a plurality of first channel states related to a plurality of first reference signals,
wherein the first channel state information is generated based on the plurality of first reference signals,
wherein the plurality of first reference signals are transmitted by a third device to the first device, and
wherein the first device is served by the second device.

18. The method of claim 17, further comprising:
transmitting, to the third device, the first channel state information.

19. A second device comprising:
at least one transceiver;
at least one processor; and
at least one memory connected to the at least one processor and storing instructions,
wherein the instructions, based on being executed by the at least one processor, cause the second device to:
receive, from a first device, first channel state information,
wherein the first channel state information is information for at least one channel state that causes a lowest interference for communication between the first device and the second device, among a plurality of first channel states related to a plurality of first reference signals,
wherein the first channel state information is generated based on the plurality of first reference signals,
wherein the plurality of first reference signals are transmitted by a third device to the first device, and
wherein the first device is served by the second device.

20. The second device of claim 19, wherein the instructions, based on being executed by the at least one processor, cause the second device to:
transmit, to the third device, the first channel state information.
